# EUROPÄISCHE PATENTSCHRIFT

(11) **EP 3 438 574 B1**
(45) Veröffentlichungstag und Bekanntmachung des Hinweises auf die Patenterteilung: **17.06.2020**
(21) Anmeldenummer: 18186034.7
(22) Anmeldetag: 27.07.2018
(51) Int. Cl.: F25B 49/02

(54) **KÄLTEANLAGE UND VERFAHREN ZUR REGELUNG EINER KÄLTEANLAGE**
REFRIGERATION SYSTEM AND A METHOD FOR REGULATING A REFRIGERATION SYSTEM
INSTALLATION FRIGORIFIQUE ET PROCÉDÉ DE RÉGLAGE D'UNE INSTALLATION FRIGORIFIQUE

(30) Priorität: 02.08.2017 DE 102017117565
(43) Veröffentlichungstag der Anmeldung: 06.02.2019
(73) Patentinhaber: Wurm GmbH & Co. KG Elektronische Systeme, 42857 Remscheid (DE)
(72) Erfinder: Hegglin, Andreas, 8404 Reutlingen (CH); Dreisbach, Heiko, 42781 Haan (DE)
(74) Vertreter: Manitz Finsterwald Patent- und Rechtsanwaltspartnerschaft mbB

(56) Entgegenhaltungen:
- EP-A1- 3 023 713
- EP-A2- 0 217 605
- JP-A- H09 318 169
- US-A- 3 600 904
- US-A1- 2010 132 395

## Beschreibung

Die vorliegende Erfindung betrifft eine Kälteanlage und ein Verfahren zur Regelung einer Kälteanlage.

Eine Kälteanlage, beispielsweise für eine oder mehrere Kühlstellen in Lebensmittelmärkten, betreibt einen Kältekreis mit einem Kältemittel. Die Kälteanlage umfasst einen ersten Verdichter, einen im Kältekreis (d.h. bezogen auf die Strömungsrichtung des Kältemittels) hinter dem ersten Verdichter angeordneten Verflüssiger oder Gaskühler, mindestens einen im Kältekreis hinter dem Verflüssiger oder Gaskühler angeordneten Verdampfer mit einem vorgeschalteten jeweiligen ersten Expansionsventil, einen zwischen dem mindestens einen Verdampfer und dem Verdichter angeordneten ersten Behälter zum Sammeln von Kältemittel, und eine Regelungseinrichtung, die derart ausgebildet ist, dass sie den Öffnungsgrad des ersten Expansionsventils derart steuert, dass der mindestens eine Verdampfer das Kältemittel auf einen Überhitzungssollwert überhitzt.

In einer Kälteanlage, die nach dem Prinzip der Trockenexpansion, auch Direktverdampfung genannt, arbeitet, steuert die Regelungseinrichtung das erste Expansionsventil derart, dass nur so viel Kältemittel in den Verdampfer einströmt, wie zu dessen vollkommener Verdampfung und einer gewissen geregelten Gasüberhitzung, relativ zu seinem Sättigungsdruck, notwendig ist.

Nachteilig an bekannten Kälteanlagen ist, dass die Wärmeübertragungsfläche in dem Verdampfer zuweilen nicht optimal genutzt werden kann. Wenn die Wärmeübertragungsfläche im Verdampfer nicht ausreichend mit Kältemittel befüllt ist, reduziert dies die Effizienz der Kälteanlage.

Grundsätzlich mögliche Ausführungsformen von Kälteanlagen und Verfahren zur Regelung solcher sind beispielsweise in US 2010/132395 A1, US 3 600 904 A, EP 0 217 605 A2, JP H09 318169 A und EP 3 023 713 A1 offenbart.

Eine Aufgabe der Erfindung besteht darin, eine Kälteanlage zu schaffen, die eine bessere Befüllung des Verdampfers mit Kältemittel erlaubt.

Diese Aufgabe wird durch eine Kälteanlage mit den Merkmalen des Anspruchs 1 gelöst.

Die Kälteanlage umfasst einen Füllstandsensor zur Messung des Füllstands des Kältemittels in dem ersten Behälter und die Regelungseinrichtung ist derart ausgebildet, dass sie den Überhitzungssollwert in Abhängigkeit von dem vom Füllstandsensor gemessenen Füllstand des Kältemittels in dem ersten Behälter einstellt.

Eine derartige Kälteanlage erlaubt eine bessere Befüllung (Flutung) des Verdampfers mit Kältemittel und somit eine bessere Ausnutzung der Wärmeübertragungsfläche des Verdampfers, indem in Abhängigkeit vom Füllstand des Kältemittels in dem ersten Behälter eine geringere oder keine Überhitzung am Ausgang des Verdampfers zugelassen und der Sättigungspunkt an das Ende des Verdampfers gebracht wird. Durch den besseren Wärmeübergang des Kältemittels steigt die Wärmeausbeute des Kältemittels und gestattet geringere Temperaturdifferenzen zwischen Kühlgut und Verdampfungstemperatur. Höhere Verdampfungstemperaturen führen zu einer höheren Effizienz der Kälteanlage. Die Regelung ist leicht zu implementieren, da grundsätzlich mit einer herkömmlichen Überhitzungsregelung gearbeitet werden kann und diese lediglich durch Anpassen des Überhitzungssollwerts übersteuert wird.

Zwischen dem Verflüssiger oder Gaskühler und dem ersten Expansionsventil ist ein zweiter Behälter zum Sammeln von Kältemittel auf einem mittleren Druckniveau angeordnet und dem zweiten Behälter ist mindestens ein Ejektor vorgeschaltet, wobei ein Sauganschluss des mindestens einen Ejektors mit dem ersten Behälter verbunden ist und der mindestens eine Ejektor dazu ausgebildet ist, Kältemittel von dem ersten Behälter zu dem zweiten Behälter zu fördern. Bei dem vom Ejektor angesaugten Kältemittel kann es sich insbesondere um ein Gas-Flüssigkeitsgemisch handeln. Durch das Abführen von Kältemittel und insbesondere dessen Flüssigkeitsanteils aus dem ersten Behälter wird der Füllstand im ersten Behälter tendenziell reduziert. Ein geringerer Füllstand im ersten Behälter führt zu einem geringeren Überhitzungssollwert und damit zu einer besseren Kältemittelversorgung des Verdampfers.

Vorteilhafte Ausführungsformen der Erfindung sind in den abhängigen Ansprüchen genannt und werden nachfolgend erläutert.

Vorzugsweise verwendet die Regelungseinrichtung den vom Füllstandsensor gemessenen Füllstand des Kältemittels in dem ersten Behälter dazu, den Überhitzungssollwert der Überhitzungsregelung zu übersteuern, indem die Regelungseinrichtung den Überhitzungssollwert bei einem steigenden Füllstand des Kältemittels in dem ersten Behälter erhöht und bei einem sinkenden Füllstand des Kältemittels in dem ersten Behälter verringert. Insbesondere kann der Überhitzungssollwert von der Regelungseinrichtung zwischen einem vorgegebenen minimalen Wert und einem vorgegebenen maximalen Wert eingestellt werden.

In besonders vorteilhafter Weise kann die Erfindung in einer transkritischen Kälteanlage eingesetzt werden.

Weiterhin kann zwischen dem Verflüssiger oder Gaskühler und dem zweiten Behälter ein zweites Expansionsventil angeordnet sein, welches parallel zu dem mindestens einen Ejektor geschaltet oder alternativ zu dem Ejektor vorgesehen ist.

Die Effizienz der Kälteanlage kann gesteigert werden, indem mindestens ein zweiter Verdichter zwischen dem zweiten Behälter und dem Verflüssiger oder Gaskühler angeordnet wird, um gasförmiges Kältemittel von dem zweiten Behälter direkt zu dem Verflüssiger oder Gaskühler zu fördern. Dadurch kann beispielsweise bei der Drosselung durch das zweite Expansionsventil entstandenes Gas, welches keinen Beitrag zur Kühlung in dem Verdampfer leisten kann, direkt wieder dem Verflüssiger oder Gaskühler zugeführt werden. Durch die Rückförderung von Kältemittel mittels des genannten Ejektors aus dem ersten Behälter in den zweiten Behälter und die Förderung des gasförmigen Kältemittels mittels des zweiten Verdichters von dem zweiten Behälter direkt zu dem Verflüssiger oder Gaskühler kann der erste Verdichter energetisch günstig entlastet werden.

Weiterhin kann gasförmiges Kältemittel von dem zweiten Behälter zu dem ersten Verdichter in vorteilhafter Weise durch mindestens ein zwischen dem zweiten Behälter und dem ersten Verdichter angeordnetes drittes Expansionsventil gedrosselt werden.

Es kann vorgesehen sein, dass der Füllstandsensor einen stetigen Messwert für den aktuellen Füllstand liefert. Alternativ kann der Füllstandsensor derart ausgebildet sein, dass er detektiert, ob der Füllstand des Kältemittels in dem ersten Behälter einen von mehreren vorgegebenen diskreten Füllstandswerten erreicht hat. In letzterem Fall kann der Füllstandsensor beispielsweise mehrere Niveauschalter enthalten, die auf unterschiedlichen Höhenniveaus im ersten Behälter angeordnet sind und Informationen darüber liefern, welches Höhenniveau der Füllstand im ersten Behälter erreicht hat.

Sofern der Füllstandsensor diskrete Füllstandswerte anzeigt, kann die Regelungseinrichtung vorzugsweise derart ausgebildet sein, dass sie in Abhängigkeit von dem diskreten Füllstandswert, den das Kältemittel in dem ersten Behälter erreicht hat, einen dem jeweiligen diskreten Füllstandswert zugeordneten Überhitzungssollwert einstellt oder eine dem jeweiligen diskreten Füllstandswert zugeordnete Anpassung des Überhitzungssollwerts vornimmt. Insbesondere kann zu jedem diskreten Füllstandswert ein zugeordneter Überhitzungssollwert oder Anpassungswert vorab festgelegt werden, so dass es nicht erforderlich ist, während des Betriebs der Kälteanlage den Überhitzungssollwert anhand des ermittelten Füllstandswerts zu berechnen.

Falls die Kälteanlage nicht nur einen, sondern mehrere im Kältekreis hinter dem Verflüssiger oder Gaskühler angeordnete Verdampfer aufweist, kann die Regelungseinrichtung derart ausgebildet sein, dass sie für jeden der mehreren Verdampfer einen individuellen Überhitzungssollwert oder für zumindest eine Gruppe der mehreren Verdampfer, insbesondere für alle Verdampfer, den gleichen Überhitzungssollwert in Abhängigkeit von dem vom Füllstandsensor gemessenen Füllstand des Kältemittels in dem ersten Behälter einstellt.

Die Erfindung bezieht sich auch auf ein Verfahren zur Regelung einer Kälteanlage mit den Merkmalen des Anspruchs 9.

Die Erfindung wird nachfolgend lediglich beispielhaft unter Bezugnahme auf die Zeichnungen erläutert.
- Fig. 1: zeigt in einer schematischen Darstellung den Aufbau einer Kälteanlage.
- Fig. 2: zeigt ein Diagramm zur Veranschaulichung der Abhängigkeit des eingestellten Überhitzungssollwerts vom Füllstand des Kältemittels im ersten Behälter.

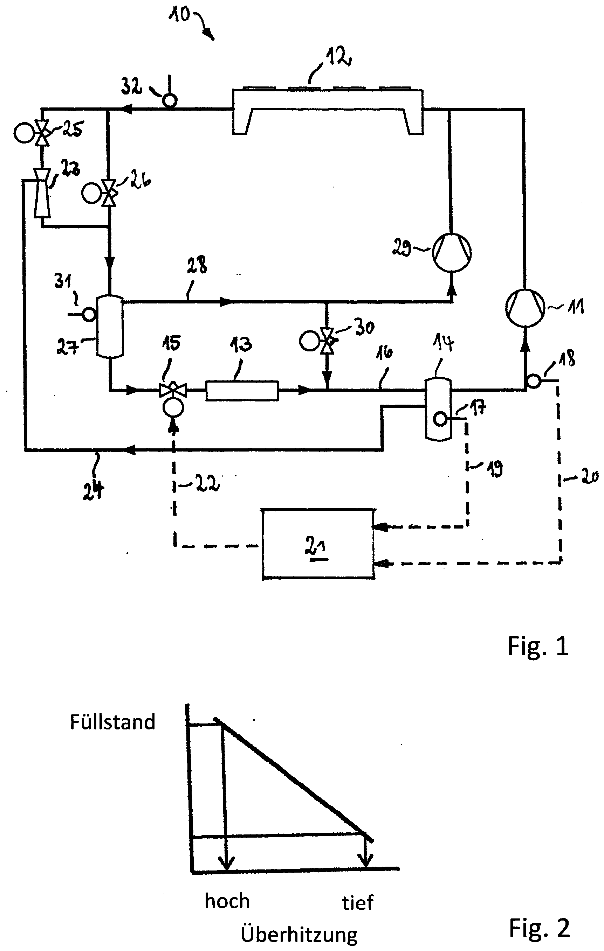

Fig. 1 zeigt eine Kälteanlage 10 zum Betreiben eines Kältekreises mit einem Kältemittel. Die Kälteanlage 10 dient beispielsweise in einem Lebensmittelmarkt zum Kühlen eines Kühlraums, zum Kühlen des Inhalts eines Kühlmöbels der Normalkühlung und/oder zum Kühlen des Inhalts eines Kühlmöbels der Tiefkühlung. Das Kältemittel kann ein synthetisches oder natürliches Kältemittel, insbesondere CO₂, sein. In Fig. 1 sind Leitungen, durch die das Kältemittel strömt, durch durchgezogene Linien gekennzeichnet, wobei Pfeile die Strömungsrichtung des Kältemittels anzeigen. Signalleitungen zur Übertragung elektrischer und/oder optischer Signale sind durch gestrichelte Linien dargestellt.

Die Kälteanlage 10 umfasst mindestens einen ersten Verdichter 11, einen im Kältekreis hinter dem ersten Verdichter 11 angeordneten Verflüssiger oder Gaskühler 12, mindestens einen im Kältekreis hinter dem Verflüssiger oder Gaskühler 12 angeordneten Verdampfer 13 und einen zwischen dem mindestens einen Verdampfer 13 und dem Verdichter 11 angeordneten ersten Behälter 14 zum Sammeln von Kältemittel, auch Saugakkumulator genannt. Dem Verdampfer 13 ist ferner ein erstes Expansionsventil 15 vorgeschaltet.

Die Leitung zwischen dem Verdampfer 13 und dem Verdichter 11, welche mit dem ersten Behälter 14 verbunden ist, wird als Saugleitung 16 bezeichnet. Falls die Kälteanlage 10 mehrere, parallel geschaltete Verdampfer 13 enthält, kann von jedem der Verdampfer 13 eine separate Leitung zu dem ersten Behälter 14 führen. Ferner ist in diesem Fall stromaufwärts von jedem der Verdampfer 13 ein jeweiliges erstes Expansionsventil 15 angeordnet.

An dem ersten Behälter 14 ist ein Füllstandsensor 17 zur Messung des Füllstands des Kältemittels in dem ersten Behälter 14 angebracht. Ferner ist ein Überhitzungsmesser 18 vorgesehen, der die Überhitzung des Kältemittels aus der Erfassung des am Messpunkt herrschenden Verdampfungsdrucks (entsprechend dem Saugdruck des Verdichters 11) und der Gastemperatur (entsprechend der Saugtemperatur) - relativ zu der diesem Punkt entsprechenden Sättigungstemperatur - bestimmt. Typischerweise wird ein Überhitzungswert als Temperaturdifferenz erfasst. In Fig. 1 befindet sich der Messpunkt des Überhitzungsmessers 18 in der Saugleitung 16 stromaufwärts von dem ersten Behälter 14. Alternativ kann der Messpunkt auch stromabwärts von dem ersten Behälter 14 liegen.

Signalleitungen 19 und 20 verbinden Signalausgänge des Füllstandsensors 17 und des Überhitzungsmessers 18 mit Signaleingängen einer Regelungseinrichtung 21 und dienen dazu, den von dem Füllstandsensor 17 gemessene Füllstandswert des Kältemittels in dem ersten Behälter 14 und den von dem Überhitzungsmesser 17 ermittelten Überhitzungswert der Regelungseinrichtung 21 zuzuführen. Die Regelungseinrichtung 21 erzeugt anhand dieser Werte ein Steuersignal, das über eine Signalleitung 22 in einen Steuereingang des ersten Expansionsventils 15 eingespeist wird.

Mindestens ein Ejektor 23, der statisch oder regelbar sein kann, ist in dem Kältekreis stromabwärts von dem Verflüssiger oder Gaskühler 12 angeordnet. Ein Sauganschluss des Ejektors 23 ist über eine Leitung 24 mit dem ersten Behälter 14 verbunden, wobei die Leitung 24 von einem unteren Bereich des ersten Behälters 14 abzweigt. Dem Ejektor 23 ist ein Absperr- oder Regelventil 25 vorgeschaltet. Sofern die Kälteanlage 10 mehrere Ejektoren 23 enthält, sind diese in parallelen Zweigen angeordnet und ihre Sauganschlüsse sind jeweils mit dem ersten Behälter 14 verbunden. Außerdem sind den Ejektoren 23 entsprechende Absperr- oder Regelventile 25 vorgeschaltet.

Darüber hinaus enthält die Kälteanlage 10 einen zu dem Ejektor 23 parallelen Zweig mit einem darin angeordneten zweiten Expansionsventil 26, auch Hochdruckdrosselventil genannt. Auf den Zweig mit dem zweiten Expansionsventil 26 kann alternativ auch verzichtet werden.

Die parallelen Zweige mit dem mindestens einen Ejektor 23 und dem zweiten Expansionsventil 26 führen zu einem zweiten Behälter 27 zum Sammeln von Kältemittel, auch Mitteldruckbehälter genannt. Der zweite Behälter 27 dient als Separator, indem flüssiges Kältemittel aus dem zweiten Behälter 27 dem ersten Expansionsventil 15 und dem nachgeordneten Verdampfer 13 zugeführt wird und gasförmiges Kältemittel aus dem zweiten Behälter 27 mit Hilfe einer Leitung 28 abgeführt wird. Die Leitung 28 verzweigt in einen Zweig mit mindestens einem zweiten Verdichter 29, auch Mitteldruck- oder Parallelverdichter genannt, der zum Eingang des Verflüssigers oder Gaskühlers 12 führt, und einen Zweig mit einem dritten Expansionsventil 30, auch Mitteldruckdrosselventil genannt, der in die Saugleitung 16 mündet.

An dem zweiten Behälter 27 ist ein Füllstandsensor 31 zur Messung des Füllstands des Kältemittels angebracht. Ferner ist stromabwärts des Verflüssigers oder Gaskühlers 12 eine Messvorrichtung 32 zur Messung des dort herrschenden Drucks vorgesehen. Obgleich entsprechende Signalleitungen in Fig. 1 nicht eingezeichnet sind, können die von dem Füllstandsensor 31 und der Messvorrichtung 32 ermittelten Messwerte der Regelungseinrichtung 21 zugeführt werden.

Während des Betriebs der Kälteanlage 10 steuert die Regelungseinrichtung 21 den Öffnungsgrad des ersten Expansionsventils 15 derart, dass der Verdampfer 13 das Kältemittel auf einen Überhitzungssollwert überhitzt. Der Überhitzungssollwert bildet zum Zwecke der Überhitzungsregelung die Führungsgröße. Zusätzlich stellt die Regelungseinrichtung 21 den Überhitzungssollwert in Abhängigkeit von dem vom Füllstandsensor 17 gemessenen Füllstand des Kältemittels in dem ersten Behälter 14 ein. Sofern die Kälteanlage 10 mehrere Verdampfer 13 umfasst, kann die Regelungseinrichtung 21 einen gemeinsamen Regelkreis oder einen separaten Regelkreis für jeden der Verdampfer 13 enthalten.

Bei einer herkömmlichen Trockenverdampfungsregelung wird eine am Ausgang des Verdampfers 13 gemessene Überhitzung einem Überhitzungssollwert angeglichen. Die Regelungseinrichtung 21 übersteuert die herkömmliche Trockenverdampfungsregelung in Abhängigkeit des Füllstands des Kältemittels im ersten Behälter 14, indem der Überhitzungssollwert bei steigendem Füllstand vergrößert und bei sinkendem Füllstand verkleinert wird. Hierdurch wird eine Minimierung der Überhitzung am Ausgang des Verdampfers 13 erreicht.

Der Ejektor 23 saugt über die Leitung 24 ein Gemisch aus gasförmigem und flüssigem Kältemittel, auch Nassdampf genannt, aus dem ersten Behälter 14 ab und bringt das Kältemittelgemisch auf ein höheres Druckniveau. Von dem Ejektor 23 gelangt das Kältemittelgemisch in den zweiten Behälter 27. Durch das Absaugen des Kältemittels aus dem ersten Behälter 14 wird tendenziell ein geringerer Füllstand im ersten Behälter 14 erreicht, was zu einer geringeren Sollüberhitzung im Verdampfer 13 führt und damit wiederum zu einer höheren Kältemittelversorgung, d.h. Flutung, des Verdampfers 13. Ist die Leistungsgrenze des Ejektors 23 erreicht, steigt der Füllstand des Kältemittels im ersten Behälter 14. Die Regelungseinrichtung 21 übersteuert nun die Verdampferregelung im Sinne einer Reduktion der Verdampferfüllung, bis sich ein Pegel zwischen einem Minimum und einem Maximum einstellt.

Ein exzessives Umspülen von flüssigem Kältemittel ist nicht erwünscht. Es ist daher vorgesehen, den Ejektor 23 nicht zu leistungsstark zu dimensionieren. Es hat sich gezeigt, dass aufgrund geringerer Druckdifferenzen die standardmäßig an Verdampfern verbauten Expansionsventile kaum eine massive Überfüllung zulassen.

Der Füllstand des Kältemittels im ersten Behälter 14 zeigt an, ob flüssiges Kältemittel aus den Verdampfern 13 zurückfließt. Ist dies der Fall, kann bei ähnlichen Verdampfern 13 davon ausgegangen werden, dass diese im Sinne einer Sättigung gefüllt sind. Diese Sättigung kann unter geeigneten Vorkehrungen auch durch die Messung der Überhitzung in der Saugleitung 16 mit Hilfe des Überhitzungsmessers 18 festgestellt werden. Hierbei kann auf die Füllstandmessung verzichtet werden.

Das von dem Ejektor 23 geförderte gasförmige Kältemittel kann zusammen mit dem durch die Drosselung im zweiten Expansionsventil 26 entstandenen Gas über den zweiten Verdichter 29 effizienzsteigernd weggefördert werden und direkt wieder dem Verflüssiger oder Gaskühler 12 zugeführt werden. Ferner kann gasförmiges Kältemittel über das dritte Expansionsventil 30 in die Saugleitung 16 abgeführt werden, ohne den Verdampfer 13 zu durchströmen.

Der Füllstandsensor 17 zur Messung des Füllstands des Kältemittels in dem ersten Behälter 14 kann beispielsweise eine kontinuierlich messende Sonde umfassen, die optisch oder elektronisch einen stetigen Messwert für den aktuellen Füllstand liefert. Der Messwert wird von der Regelungseinrichtung 21 weiterverwendet und dort insbesondere auch gespeichert. Die Regelungseinrichtung 21 ist in der Lage, die gebräuchliche Überhitzungsregelung der einzelnen Verdampfer 13 dergestalt zu beeinflussen, dass bei steigendem Pegel im ersten Behälter 14 die Überhitzung kollektiv bei allen oder mehreren oder individuell bei einzelnen Verdampfern 13 um einen bestimmten Betrag erhöht oder verringert wird. Dieser Betrag kann als Funktion des Füllstands in der Regelungseinrichtung 21 eingestellt werden. Die Regelungseinrichtung 21 kann die laufend ermittelten Messwerte in Sollwerte für die Überhitzungsregelung umrechnen. Mittels einer Schiebefunktion über Bus-Kommunikation oder anderer Mittel können die Sollwerte für die Überhitzungsregelung an alle oder nur an ausgewählte Überhitzungsregler übermittelt werden.

Im Diagramm von Fig. 2 ist die Übersteuerung der Überhitzungsregelung veranschaulicht. Bei einem hohen Füllstand im ersten Behälter 14 wird ein hoher Überhitzungssollwert eingestellt, während bei einem niedrigen Füllstand ein geringer Überhitzungssollwert gewählt wird.

Über die Zeit stellt sich im ersten Behälter 14 zwingend ein gewisser Pegel ein. Er ist Ausdruck des Gleichgewichtszustands zwischen den gesättigten und möglicherweise ungesättigten Gasströmen aus allen Verdampfern 13. Geeignete Regelgeräte gestatten, den relativen Öffnungsgrad des oder der ersten Expansionsventils/e 15 zu bestimmen und lassen Rückschlüsse über die abgegebene Kälteleistung zu, beispielsweise ob sich eine Restüberhitzung durch zu klein gewählte Drosselorgane einstellt. Diese Informationen helfen, die Drosselorgane einzelner Kühlstellen mit ungenügender Leistung gegebenenfalls anzupassen.

Als Alternative zu einer einen stetigen Messwert liefernden Sonde kann der Füllstandsensor 17 mehrere im ersten Behälter 14 angebrachte Sonden umfassen, die ein diskretes Füllstandsignal an die Regelungseinrichtung 21 übermitteln. Beispielsweise kann der Füllstandsensor 17 mehrere Niveauschalter umfassen, die es erlauben, zwischen einem unteren, mittleren und oberen Füllstand zu unterschieden. Diesen drei Zuständen können in der Regelungseinrichtung 21 bestimmte Überhitzungssollwerte zugeordnet sein. Beispielsweise kann bei einem unteren Füllstand keine oder nur eine minimale und bei einem oberen Füllstand eine bedeutende Überhitzung als Sollwert den Überhitzungsreglern vorgegeben werden.

### Bezugszeichenliste

- 10: Kälteanlage
- 11: Verdichter
- 12: Verflüssiger oder Gaskühler
- 13: Verdampfer
- 14: Behälter
- 15: Expansionsventil
- 16: Saugleitung
- 17: Füllstandsensor
- 18: Überhitzungsmesser
- 19: Signalleitung
- 20: Signalleitung
- 21: Regelungseinrichtung
- 22: Signalleitung
- 23: Ejektor
- 24: Leitung
- 25: Absperr- oder Regelventil
- 26: Expansionsventil
- 27: Behälter
- 28: Leitung
- 29: Verdichter
- 30: Expansionsventil
- 31: Füllstandsensor
- 32: Messvorrichtung

## Patentansprüche

1. Kälteanlage (10) zum Betreiben eines Kältekreises mit einem Kältemittel, umfassend:
- einen ersten Verdichter (11),
- einen im Kältekreis hinter dem ersten Verdichter (11) angeordneten Verflüssiger oder Gaskühler (12),
- mindestens einen im Kältekreis hinter dem Verflüssiger oder Gaskühler (12) angeordneten Verdampfer (13) mit einem vorgeschalteten jeweiligen ersten Expansionsventil (15),
- einen zwischen dem mindestens einen Verdampfer (13) und dem Verdichter (11) angeordneten ersten Behälter (14) zum Sammeln von Kältemittel,
- einen Füllstandsensor (17) zur Messung des Füllstands des Kältemittels in dem ersten Behälter (14), und
- eine Regelungseinrichtung (21), die derart ausgebildet ist, dass sie einen Überhitzungssollwert in Abhängigkeit von dem vom Füllstandsensor (17) gemessenen Füllstand des Kältemittels in dem ersten Behälter (14) einstellt und dass sie den Öffnungsgrad des jeweiligen ersten Expansionsventils (15) derart steuert, dass der mindestens eine Verdampfer (13) das Kältemittel auf den Überhitzungssollwert überhitzt,
**gekennzeichnet durch** einen zwischen dem Verflüssiger oder Gaskühler (12) und dem jeweiligen ersten Expansionsventil (15) angeordneten zweiten Behälter (27) zum Sammeln von Kältemittel und mindestens einen dem zweiten Behälter (27) vorgeschalteten Ejektor (23), wobei ein Sauganschluss des mindestens einen Ejektors (23) mit dem ersten Behälter (14) verbunden ist und der mindestens eine Ejektor (23) dazu ausgebildet ist, Kältemittel von dem ersten Behälter (14) zu dem zweiten Behälter (27) zu fördern.

2. Kälteanlage (10) nach Anspruch 1,
**dadurch gekennzeichnet, dass**
die Regelungseinrichtung (21) ferner derart ausgebildet ist, dass sie den Überhitzungssollwert bei einem steigenden Füllstand des Kältemittels in dem ersten Behälter (14) erhöht und bei einem sinkenden Füllstand des Kältemittels in dem ersten Behälter (14) verringert.

3. Kälteanlage (10) nach Anspruch 1 oder 2,
**gekennzeichnet durch**
ein zwischen dem Verflüssiger oder Gaskühler (12) und dem zweiten Behälter (27) angeordnetes zweites Expansionsventil (26), welches parallel zu dem mindestens einen Ejektor (23) geschaltet ist.

4. Kälteanlage (10) nach zumindest einem der vorstehenden Ansprüche,
**gekennzeichnet durch**
mindestens einen zwischen dem zweiten Behälter (27) und dem Verflüssiger oder Gaskühler (12) angeordneten zweiten Verdichter (29), der dazu ausbildet ist, gasförmiges Kältemittel von dem zweiten Behälter (27) zu dem Verflüssiger oder Gaskühler (12) zu fördern.

5. Kälteanlage (10) nach zumindest einem der vorstehenden Ansprüche,
**gekennzeichnet durch**
mindestens ein zwischen dem zweiten Behälter (27) und dem ersten Verdichter (11) angeordnetes drittes Expansionsventil (30), das dazu ausgebildet ist, gasförmiges Kältemittel von dem zweiten Behälter (27) zu dem ersten Verdichter (11) strömen zu lassen.

6. Kälteanlage (10) nach zumindest einem der vorstehenden Ansprüche,
**dadurch gekennzeichnet, dass**
der Füllstandsensor (17) derart ausgebildet ist, dass er detektiert, ob der Füllstand des Kältemittels in dem ersten Behälter (14) einen von mehreren vorgegebenen diskreten Füllstandswerten erreicht hat.

7. Kälteanlage (10) nach Anspruch 6,
**dadurch gekennzeichnet, dass**
die Regelungseinrichtung (21) ferner derart ausgebildet ist, dass sie in Abhängigkeit von dem diskreten Füllstandswert, den das Kältemittel in dem ersten Behälter (14) erreicht hat, einen dem jeweiligen diskreten Füllstandswert zugeordneten Überhitzungssollwert einstellt.

8. Kälteanlage (10) nach zumindest einem der vorstehenden Ansprüche,
**dadurch gekennzeichnet, dass**
die Kälteanlage (10) mehrere im Kältekreis hinter dem Verflüssiger oder Gaskühler (12) angeordnete Verdampfer (13) aufweist und die Regelungseinrichtung derart (21) ausgebildet ist, dass sie für jeden der mehreren Verdampfer (13) einen individuellen Überhitzungssollwert oder für zumindest eine Gruppe der mehreren Verdampfer (13) den gleichen Überhitzungssollwert in Abhängigkeit von dem vom Füllstandsensor (17) gemessenen Füllstand des Kältemittels in dem ersten Behälter (14) einstellt.

9. Verfahren zur Regelung einer Kälteanlage (10) nach einem der Ansprüche 1 bis 8,
wobei der Füllstand des Kältemittels in dem ersten Behälter (14) gemessen wird und ein Überhitzungssollwert in Abhängigkeit von dem Füllstand des Kältemittels in dem ersten Behälter (14) eingestellt wird, und
wobei der Öffnungsgrad des jeweiligen ersten Expansionsventils (15) derart gesteuert wird, dass der mindestens eine Verdampfer (13) das Kältemittel auf den Überhitzungssollwert überhitzt.

10. Verfahren nach Anspruch 9,
**dadurch gekennzeichnet, dass**
der Überhitzungssollwert bei einem steigenden Füllstand des Kältemittels in dem ersten Behälter (14) vergrößert und bei einem sinkenden Füllstand des Kältemittels in dem ersten Behälter (14) verringert wird.

11. Verfahren nach Anspruch 9 oder 10,
**dadurch gekennzeichnet, dass**
gasförmiges Kältemittel von dem zweiten Behälter (27) zu dem Verflüssiger oder Gaskühler (12) und/oder zu dem ersten Verdichter (11) gefördert wird.

12. Verfahren nach einem der Ansprüche 9 bis 11,
**dadurch gekennzeichnet, dass**
die Kälteanlage (10) mehrere im Kältekreis hinter dem Verflüssiger oder Gaskühler (12) angeordnete Verdampfer (13) aufweist und für jeden der mehreren Verdampfer (13) ein individueller Überhitzungssollwert oder für zumindest eine Gruppe der mehreren Verdampfer (13) der gleiche Überhitzungssollwert in Abhängigkeit von dem Füllstand des Kältemittels in dem ersten Behälter (14) eingestellt wird.

## Claims

1. A refrigeration system (10) for operating a refrigeration circuit having a refrigerant, comprising:
- a first compressor (11);
- a condenser or gas cooler (12) arranged behind the first compressor (11) in the refrigeration circuit;
- at least one evaporator (13) which is arranged behind the condenser or gas cooler (12) in the refrigeration circuit and which has a respective first expansion valve (15) connected upstream;
- a first container (14) for collecting refrigerant arranged between the at least one evaporator (13) and the compressor (11);
- a filling level sensor (17) for measuring the filling level of the refrigerant in the first container (14); and
- a regulation device (21) which is configured such that it sets a desired overheating value in dependence on the filling level of the refrigerant in the first container (14) measured by the filling level sensor (17) and such that it controls a degree of opening of the respective first expansion valve (15) such that the at least one evaporator (13) overheats the refrigerant to the desired overheating value,
**characterized by**
a second container (27) for collecting refrigerant arranged between the condenser or gas cooler (12) and the respective first expansion valve (15); and by at least one ejector (23) connected upstream of the second container (27), with a suction connector of the at least one ejector (23) being connected to the first container (14) and the at least one ejector (23) being configured to convey refrigerant from the first container (14) to the second container (27).

2. A refrigeration system (10) in accordance with claim 1,
**characterized in that**
the regulation device (21) is further configured such that it increases the desired overheating value when the filling level of the refrigerant in the first container (14) rises and reduces the desired overheating value when the filling level of the refrigerant in the first container (14) drops.

3. A refrigeration system (10) in accordance with claim 1 or claim 2,
**characterized by**
a second expansion valve (26) which is arranged between the condenser or gas cooler (12) and the second container (27) and which is connected in parallel with the at least one ejector (23).

4. A refrigeration system (10) in accordance with at least one of the preceding claims,
**characterized by**
at least a second compressor (29) which is arranged between the second container (27) and the condenser or gas cooler (12) and which is configured to convey gaseous refrigerant from the second container (27) to the condenser or gas cooler (12).

5. A refrigeration system (10) in accordance with at least one of the preceding claims,
**characterized by**
at least a third expansion valve (30) which is arranged between the second container (27) and the first compressor (11) and which is configured to allow gaseous refrigerant to flow from the second container (27) to the first compressor (11).

6. A refrigeration system (10) in accordance with at least one of the preceding claims,
**characterized in that**
the filling level sensor (17) is configured such that it detects whether the filling level of the refrigerant in the first container (14) has reached one of a plurality of predefined discrete filling level values.

7. A refrigeration system (10) in accordance with claim 6,
**characterized in that**
the regulation device (21) is further configured such that, in dependence on the discrete filling level value which the refrigerant reached in the first container (14), it sets a desired overheating value associated with the respective discrete filling level value.

8. A refrigeration system (10) in accordance with at least one of the preceding claims,
**characterized in that**
the refrigeration system (10) has a plurality of evaporators (13) arranged behind the condenser or gas cooler (12) in the refrigeration circuit and the regulation device (21) is configured such that it sets an individual desired overheating value for each of the plurality of evaporators (13) or sets the same desired overheating value for at least one group of the plurality of evaporators (13) in dependence on the filling level of the refrigerant in the first container (14) measured by the filling level sensor (17).

9. A method of regulating a refrigeration system (10) in accordance with any one of the claims 1 to 8,
wherein the filling level of the refrigerant in the first container (14) is measured and a desired overheating value is set in dependence on the filling level of the refrigerant in the first container (14); and
wherein the degree of opening of the respective first expansion valve (15) is controlled such that the at least one evaporator (13) overheats the refrigerant to the desired overheating value.

10. A method in accordance with claim 9,
**characterized in that**
the desired overheating value is increased when the filling level of the refrigerant in the first container (14) rises and is reduced when the filling level of the refrigerant in the first container (14) drops.

11. A method in accordance with claim 9 or claim 10,
**characterized in that**
gaseous refrigerant is conveyed from the second container (27) to the condenser or gas cooler (12) and/or to the first compressor (11).

12. A method in accordance with any one of the claims 9 to 11,
**characterized in that**
the refrigeration system (10) has a plurality of evaporators (13) arranged behind the condenser or gas cooler (12) in the refrigeration circuit; and **in that** an individual desired overheating value is set for each of the plurality of evaporators (13) or the same desired overheating value is set for at least one group of the plurality of evaporators (13) in dependence on the filling level of the refrigerant in the first container (14).

## Revendications

1. Installation frigorifique (10) pour faire fonctionner un circuit de réfrigération avec un réfrigérant, comprenant :
- un premier compresseur (11),
- un condenseur ou refroidisseur de gaz (12) situé en aval du premier compresseur (11) dans le circuit de réfrigération,
- au moins un évaporateur (13) disposé dans le circuit frigorifique en aval du condenseur ou refroidisseur de gaz (12) et comportant une première vanne de détente respective (15) disposée en amont,
- un premier récipient (14) pour collecter le réfrigérant, situé entre ledit au moins un évaporateur (13) et le compresseur (11),
- un capteur de niveau de remplissage (17) pour mesurer le niveau de remplissage du réfrigérant dans le premier récipient (14), et
- un dispositif de régulation (21) qui est réalisé de manière à régler une valeur de consigne de surchauffe en fonction du niveau de remplissage du réfrigérant dans le premier récipient (14) mesuré par le capteur de niveau de remplissage (17), et à commander le degré d'ouverture de la première vanne de détende respective (15) de telle sorte que ledit au moins un évaporateur (13) fait surchauffer le réfrigérant à la valeur de consigne de surchauffe,
**caractérisée par**
un second récipient (27) pour collecter le réfrigérant, disposé entre le condenseur ou refroidisseur de gaz (12) et la première vanne de détente respective (15), et au moins un éjecteur (23) disposé en amont du second récipient (27), un raccord d'aspiration dudit au moins un éjecteur (23) étant relié au premier récipient (14) et ledit au moins un éjecteur (23) étant réalisé pour transporter le réfrigérant depuis le premier récipient (14) jusqu'au second récipient (27).

2. Installation frigorifique (10) selon la revendication 1,
**caractérisée en ce que**
le dispositif de régulation (21) est en outre réalisé de manière à augmenter la valeur de consigne de surchauffe lorsque le niveau de remplissage du réfrigérant dans le premier récipient (14) monte, et à la réduire lorsque le niveau de remplissage du réfrigérant dans le premier récipient (14) baisse.

3. Installation frigorifique (10) selon la revendication 1 ou 2,
**caractérisée par**
une seconde vanne de détente (26) disposée entre le condenseur ou refroidisseur de gaz (12) et le second récipient (27) et montée en parallèle audit au moins un éjecteur (23).

4. Installation frigorifique (10) selon l'une au moins des revendications précédentes,
**caractérisée par**
au moins un second compresseur (29) disposé entre le second récipient (27) et le condenseur ou refroidisseur de gaz (12) et réalisé pour transporter un réfrigérant gazeux depuis le second récipient (27) jusqu'au condenseur ou refroidisseur de gaz (12).

5. Installation frigorifique (10) selon l'une au moins des revendications précédentes,
**caractérisée par**
au moins une troisième vanne de détente (30) disposée entre le second récipient (27) et le premier compresseur (11) et réalisée pour faire circuler un réfrigérant gazeux depuis le second récipient (27) jusqu'au premier compresseur (11).

6. Installation frigorifique (10) selon l'une au moins des revendications précédentes,
**caractérisée en ce que**
le capteur de niveau de remplissage (17) est réalisé de manière à détecter si le niveau de remplissage du réfrigérant dans le premier récipient (14) a atteint l'une parmi plusieurs valeurs de niveau discrètes prédéterminées.

7. Installation frigorifique (10) selon la revendication 6,
**caractérisée en ce que**
le dispositif de régulation (21) est en outre réalisé de manière à régler une valeur de consigne de surchauffe, associée à la valeur de niveau discrète respective, en fonction de la valeur de niveau discrète qu'a atteinte le réfrigérant dans le premier récipient (14).

8. Installation frigorifique (10) selon l'une au moins des revendications précédentes,
**caractérisée en ce que**
l'installation frigorifique (10) comprend plusieurs évaporateurs (13) disposés dans le circuit de réfrigération en aval du condenseur ou refroidisseur de gaz (12), et le dispositif de régulation (21) est réalisé de manière à régler une valeur de consigne de surchauffe individuelle pour chacun desdits plusieurs évaporateurs (13) ou à régler la même valeur de consigne de surchauffe au moins pour un groupe desdits plusieurs évaporateurs (13), en fonction du niveau de remplissage du réfrigérant dans le premier récipient (14) mesuré par le capteur de niveau de remplissage (17).

9. Procédé de régulation d'une installation frigorifique (10) selon l'une des revendications 1 à 8,
dans lequel
le niveau de remplissage du réfrigérant dans le premier récipient (14) est mesuré, et une valeur de consigne de surchauffe est réglée en fonction du niveau de remplissage du réfrigérant dans le premier récipient (14), et le degré d'ouverture de la première vanne de détente respective (15) est commandé de telle sorte que ledit au moins un évaporateur (13) fait surchauffer le réfrigérant à la valeur de consigne de surchauffe.

10. Procédé selon la revendication 9,
**caractérisé en ce que**
la valeur de consigne de surchauffe est augmentée lorsque le niveau de remplissage du réfrigérant dans le premier récipient (14) monte, et est réduite lorsque le niveau de remplissage du réfrigérant dans le premier récipient (14) baisse.

11. Procédé selon la revendication 9 ou 10,
**caractérisé en ce que**
un réfrigérant gazeux est transporté depuis le second récipient (27) jusqu'au condenseur ou refroidisseur de gaz (12) et/ou jusqu'au premier compresseur (11).

12. Procédé selon l'une des revendications 9 à 11,
**caractérisé en ce que**
l'installation frigorifique (10) comprend plusieurs évaporateurs (13) disposés dans le circuit de réfrigération en aval du condenseur ou refroidisseur de gaz (12), et une valeur de consigne de surchauffe individuelle pour chacun desdits plusieurs évaporateurs (13) ou la même valeur de consigne de surchauffe au moins pour un groupe desdits plusieurs évaporateurs (13) est réglée en fonction du niveau de remplissage du réfrigérant dans le premier récipient (14).
